(19)

Europäisches
Patentamt
European
Patent Office
Office européen
des brevets

(11) **EP 4 059 995 A1**

(12) **EUROPEAN PATENT APPLICATION**
published in accordance with Art. 153(4) EPC

(43) Date of publication:
**21.09.2022 Bulletin 2022/38**

(21) Application number: **20886403.3**

(22) Date of filing: **04.11.2020**

(51) International Patent Classification (IPC):
**C08K 7/06** (2006.01)　　　**C08L 101/00** (2006.01)
**D01F 9/22** (2006.01)

(52) Cooperative Patent Classification (CPC):
**C08K 7/06; C08L 101/00; D01F 9/22**

(86) International application number:
**PCT/JP2020/041171**

(87) International publication number:
**WO 2021/095597 (20.05.2021 Gazette 2021/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.11.2019 JP 2019203838**

(71) Applicant: **Toray Industries, Inc.
Tokyo, 103-8666 (JP)**

(72) Inventors:
• **OKUDA, Haruki
Iyo-gun, Ehime 791-3193 (JP)**
• **WATANABE, Jun
Iyo-gun, Ehime 791-3193 (JP)**
• **TANAKA, Fumihiko
Iyo-gun, Ehime 791-3193 (JP)**

(74) Representative: **Mewburn Ellis LLP
Aurora Building
Counterslip
Bristol BS1 6BX (GB)**

(54) **MOLDING MATERIAL AND MOLDED ARTICLE**

(57)　　The present invention aims to provide a resin composition that is high in moldability in producing a member of a complicated shape by injection molding and also high in flexural modulus and impact property. A molding material including a resin composition containing a thermoplastic resin and carbon fibers, wherein the carbon fibers have substantially the same length as the length of the molding material; the twist angle of the carbon fiber surface layer is 2.0° to 30.5°; the core ratio A/(A+B) is 0.1 to 0.5 where A is the areal fraction of the core portion containing carbon fibers and B is the areal fraction of the remaining portion, that is, the sheath portion, in a cross section perpendicular to the carbon fiber axis direction in the molding material; and the areal void fraction in a cross section perpendicular to the carbon fiber axis direction in the molding material is 5% or less.

EP 4 059 995 A1

**Description**

TECHNICAL FIELD

The present invention relates to a molding material including a resin composition containing a thermoplastic resin and carbon fibers. More specifically, the present invention relates to a molding material characterized by smooth dispersion of carbon fibers in the molded product during injection molding.

BACKGROUND ART

Having good mechanical properties, carbon fiber composite materials, such as carbon fiber reinforced plastics in particular, are widely used in recent years as lightweight materials to replace light metal members in which aluminum etc. have been used conventionally. To produce carbon fiber reinforced plastics, however, long fibers in the form of continuous fibers or discontinuous fibers with lengths of several millimeters or more are used in most cases in order to develop good mechanical properties, and in such cases, problems can occur from difficulties encountered in molding them into complicated shapes. To avoid this, it may be conceivable to adopt the injection molding technique, which can work effectively to produce products of complex shapes, but if it is applied to thermoplastic resin based molding materials containing carbon fibers, the resulting molded products are generally low in flexural modulus and fail to have good mechanical properties required to replace light metal materials. Thus, the molded products cannot realize satisfactory quality.

Pelletized molding materials are suitable for injection molding. However, in order to produce a carbon fiber-containing injection-molded thermoplastic resin product with a high flexural modulus, a commonly used technique is to adopt a process in which carbon fibers maintain long fiber lengths. Specifically, this is achieved by omitting the severance of carbon fibers to short lengths in the molding material preparation step, but allowing the carbon fibers to maintain substantially the same length as the length of the molding material (Patent document 1). An attempt to develop a molding material with a decreased number of voids has also been proposed (Patent document 2). Other attempts have been made to apply twisted reinforcing fibers with the aim of developing a molding material with improved handleability (Patent document 3, Non-patent document 1). In another effort, carbon fibers with a tensile modulus of 390 to 450 GPa are adopted to obtain molded products having improved physical properties, although the carbon fibers used are in the form of short fibers (Patent document 4).

PRIOR ART DOCUMENTS

PATENT DOCUMENTS

Patent document 1: Japanese Unexamined Patent Publication (Kokai) No. HEI 6-320536
Patent document 2: Japanese Unexamined Patent Publication (Kokai) No. 2000-309060
Patent document 3: Japanese Unexamined Patent Publication (Kokai) No. HEI 5-169445
Patent document 4: Japanese Unexamined Patent Publication (Kokai) No. 2017-190426

NON-PATENT DOCUMENTS

Non-patent document 1: KOBE STEEL ENGINEERING REPORTS Vol.67, No.2 (2018)

SUMMARY OF INVENTION

PROBLEMS TO BE SOLVED BY THE INVENTION

These conventional techniques, however, have problems as described below.

In Patent document 1, the carbon fibers have substantially the same length as the length of the molding material, and the molding material is divided into layers in such a manner that the content of the reinforcing fiber is higher in one layer while it is lower in the other. However, the carbon fibers are not twisted, and consequently, the resulting molded products are inferior in physical properties and dispersibility. In Patent document 2, although it is shown that it is better for a molding material to contain less voids, the void fraction achieved in the embodiments of the invention is still as high as 40%, and the resulting molded product are inferior in physical properties and dispersibility. In Patent document 3 and Non-patent document 1, the reinforcing fibers are twisted during the step for preparing the molding materials, but the molded products are inferior in physical properties and dispersibility due to voids contained in the molding materials. In Patent document 4, carbon fibers in the form of short fibers are used in the molding material, and consequently, the resulting molded product is inferior in physical properties and dispersibility.

As described above, the conventional technologies have provided various resin compositions that contain thermoplastic resins and molding materials that contain carbon fibers based on different ideas including a molding material that contains carbon fibers having substantially the same length as the length of the molding material, a molding material that contains a decreased number of voids, and a molding material that contains twisted carbon fibers. However, there has been no proposal of a molding material that simultaneously achieves all these good features and is suited to the injection molding process. In addition, in none of them, a molded product having improved physical properties and dispersibility can be produced successfully by using a molding material that contains carbon fibers having high tensile modulus and also having substantially the same length as the length of the molding material.

MEANS OF SOLVING THE PROBLEMS

The present invention adopts the following constitution to solve the problems described above.

Specifically, the molding material according to the present invention is a molding material including a resin composition containing a thermoplastic resin and carbon fibers, wherein the carbon fibers have substantially the same length as the length of the molding material; the twist angle of the carbon fiber surface layer is 2.0° to 30.5°; the core ratio A/(A+B) is 0.1 to 0.5 where A is the areal fraction of the core portion containing carbon fibers and B is the areal fraction of the remaining portion, that is, the sheath portion, in a cross section perpendicular to the carbon fiber axis direction in the molding material; and the areal void fraction in a cross section perpendicular to the carbon fiber axis direction in the molding material is 5% or less.

In addition, the molded product according to the present invention is one produced by molding the aforementioned molding material.

ADVANTAGEOUS EFFECTS OF THE INVENTION

The molding material according to the present invention is not only high in moldability in producing a member having a complicated shape by injection molding but also useful to provide a molded product having good physical properties and dispersibility.

BRIEF DESCRIPTION OF THE DRAWINGS

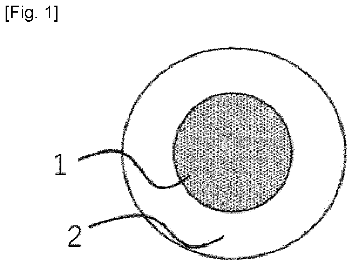

[Fig. 1] This is a diagram of a typical cross section in the carbon fiber axis direction of the molding material according to the present invention.

DESCRIPTION OF PREFERRED EMBODIMENTS

The molding material according to the present invention includes a resin composition containing a thermoplastic resin and carbon fibers.

First, carbon fibers to be used for the present invention are described below.

Carbon fibers to be used for the present invention are in the form of aggregates having the form of fiber bundles and are present in the molding material. The filament number of the carbon fiber is not particularly limited, but it is preferably 3,000 to 60,000, and the twist angle of the carbon fiber surface layer in the molding material is 2.0° to 30.5°, preferably 4.8° to 30.5°, and more preferably 4.8° to 24.0°. The twist angle in the carbon fiber surface layer means the angle between the fiber axis direction of the single-fibers present on the outermost face of the carbon fibers existing in the form of aggregates, that is, along the boundary between the core portion and the sheath portion described later, in the molding material and the long axis direction of the bundles of the carbon fibers. It may be directly observed, but can be calculated more precisely from the twist count of the carbon fiber bundles, filament number, and single-fiber diameter. The twist angle of the carbon fiber surface layer of a molding material can be measured by extracting carbon fiber bundles from the molding material by burning-off etc. and observing them. For the molding material according to the present invention, a molded product containing highly dispersed carbon fibers can be obtained, that is, a molded product having good physical properties can be obtained, by controlling the twist angle within the range specified above. The filament number of the carbon fibers in the molding material and the twist angle of the carbon fiber surface layer can be adjusted properly by changing the filament number of the carbon fiber bundles to be included, the number of carbon fiber bundles, and the twisting conditions of the carbon fiber bundles (use of twisted treads and twisting during the process) in the production processes for the carbon fibers used as raw material and for the molding material.

The filament number of carbon fibers in a single molding material according to the present invention is preferably 3,000 to 60,000, more preferably 10,000 to 60,000, and still more preferably 20,000 to 60,000. The volume fraction of carbon fibers in the molding material can be adjusted by changing the size of the molding material and the filament number of carbon fibers in the molding material. The filament number of carbon fibers contained in a molding material may be adjusted by changing the number of filaments contained in each of the carbon fiber bundles that are used as raw material for molding material preparation or may be adjusted by feeding a plurality of carbon fiber bundles that are used as raw material for molding material preparation.

The carbon fibers used for the present invention preferably have a tensile elastic modulus of 280 to 500 GPa, more preferably 330 GPa or more, and still more preferably 350 GPa or more. As the tensile elastic modulus of the carbon fibers increases, the injection molded product produced by molding the molding material easily increases in flexural modulus. In addition, as the dispersibility of the carbon fibers in the molded product increases, its flexural modulus increases easily. If the tensile elastic modulus is 280 GPa or more, it will have a high industrial value because it serves to produce an injection molded product having a higher flexural modulus. From the viewpoint of providing an injection molded product having an increased flexural modulus, it is desirable for the carbon fibers to have a higher tensile elastic modulus, but if it is too high, the carbon fibers are broken more frequently during molding and can serve less effectively in producing an injection molded product having a higher flexural modulus. Thus, the tensile modulus should be 500 GPa or less. The tensile modulus of carbon fibers can be determined according to the tensile test of resin-impregnated strands specified in JIS R7608 (2004). An evaluation method for the tensile modulus of resin-impregnated strands will be described later.

For the carbon fibers used for the present invention, the upper limit of the crystallinity parameter Iv/Ig as determined by Raman spectroscopy is preferably 0.80, more preferably 0.70, and still more preferably 0.60. On the other hand, the lower limit of Iv/Ig is preferably 0.25, more preferably 0.30, and still more preferably 0.40. Raman spectrum taken from a single-fiber cross section of carbon fibers have G-band near 1580 $cm^{-1}$, D-band near 1,360 $cm^{-1}$, and a valley between them near 1,480 $cm^{-1}$. The ratio between the peak intensity of G band, which is denoted by Ig, and the minimum spectral intensity near 1,480 $cm^{-1}$, which is denoted by Iv, serves as an indicator of the progress of crystallization of internal structures of carbon fibers. Among commercially available carbon fibers, those with tensile modulus near 380 GPa have a Iv/Ig ratio of less than 0.2 and those with tensile modulus of 230 to 290 GPa have a Iv/Ig ratio of 0.70 or more. If the Iv/Ig ratio is 0.80 or less, it indicates that internal structures of carbon fibers have been crystallized sufficiently. Most carbon fibers that have such internal structures have high tensile modulus. An Iv/Ig ratio of 0.25 or more indicates that the internal crystallization of carbon fibers has not progressed excessively, and therefore, the use of carbon fibers having such internal structures makes it easy to produce a molded product having good physical properties. The crystallization parameter Iv/Ig is measured by Raman spectroscopy. The measuring technique will be described in detail later. This parameter can be adjusted by changing the maximum carbonization temperature in the carbon fiber production process.

The carbon fibers used for the present invention preferably have a weight loss rate on heating at 450°C of 0.15% or less, more preferably 0.10% or less, and still more preferably 0.07% or less. For the present invention, the weight loss rate on heating at 450°C, which will be described in detail later, is determined by weighing a specified weight of a carbon fiber specimen under measurement and calculated as the difference in mass between before and after 15 minute heating of it in an inert gas atmosphere in an oven maintained at a temperature of 450°C. Carbon fibers having a small weight loss rate on heating under such conditions are generally low in the contents of components, such as sizing agent, that are liable to thermal decomposition when exposed to high temperatures. Thus, carbon fibers having a weight loss rate on heating of 0.15% or less are generally high in dispersibility in a resin composition and accordingly serve for easy production of an injection molded product having a high flexural modulus.

The carbon fibers used for the present invention preferably have a single-fiber diameter of 6.0 $\mu$m or more, more preferably 6.5 $\mu$m or more, and still more preferably 6.9 $\mu$m or more. With an increasing single-fiber diameter, the fibers tend to persist for a longer time in the injection molding step, and as a result, it will be possible to produce a molded product having a high flexural modulus. Accordingly, a single-fiber diameter of 6.0 $\mu$m or more serves to realize easy production of an injection molded product having a high flexural modulus. For the present invention, there are no particular limitations on the upper limit of the single-fiber diameter, but if it is too large, the fibers will decrease in tensile modulus. Thus, it may be assumed that the upper limit is practically about 15 $\mu$m. Determination methods for the single-fiber diameter will be described later, but it may be calculated from the density, areal weight, and filament number of the carbon fibers or may be determined from scanning electron microscopic observation. If the measuring devices to be used are correctly calibrated, substantially the same results can be obtained by any method. If the cross-sectional shape of a single fiber sample under observation by scanning electron microscopy is not a perfect circle, the equivalent circle diameter is used instead. The equivalent circle diameter of a single fiber is defined as the diameter of a perfect circle having a cross-sectional area equal to the measured cross-sectional area.

The resin composition used for the present invention contains a thermoplastic resin and an additive as required. Here, a resin composition may be composed only of a single thermoplastic resin. For the core portion and the sheath portion described later, the resin compositions included therein may be composed of the same components or may contain different components.

The thermoplastic resin used for the present invention is preferably at least one thermoplastic resin selected from the group consisting of polyolefin, polyamide, polyester, polycarbonate, and polyarylene sulfide, of which polyamide and polyarylene sulfide are more preferable and polyarylene sulfide is particularly preferable from the viewpoint of providing a molded product having a desired flexural modulus. When combined with carbon fibers used for the present invention, almost any thermoplastic resin, without restriction by type, can serve to produce a molded product having improved mechanical characteristics including flexural modulus, and therefore, an appropriate one can be selected from a wide variety of thermoplastic resins. The effect of the present invention can be realized more easily by adopting a thermoplastic resin that serves effectively to produce a molded product having good mechanical characteristics, namely, a thermoplastic resin that can work to develop a high tensile yield stress.

The polyolefin component may be either a propylene homopolymer or a copolymer of propylene and at least one of α-olefin, conjugated diene, nonconjugated diene, etc.

The polyamide component may be a polymer having a backbone chain formed of amide groups connected repeatedly, and examples thereof include aliphatic polyamides such as polyamide 6, polyamide 66, polyamide 11, polyamide 610, and polyamide 612, and aromatic polyamides such as polyamide 6T. A mixture thereof and a combination of different polyamide copolymers may also be used.

For the polyarylene sulfide component, useful constituent units therefor include the p-phenylene sulfide unit, m-phenylene sulfide unit, o-phenylene sulfide unit, phenylene sulfide sulfone unit, phenylene sulfide ketone unit, phenylene sulfide ether unit, diphenylene sulfide unit, substituent group-containing phenylene sulfide unit, and branched structure-containing phenylene sulfide unit. Among others, poly(p-phenylene sulfide) is particularly preferable.

The polycarbonate may be, for example, a generally known one such as the one proposed in Japanese Unexamined Patent Publication (Kokai) No. 2018-059087.

The molding material according to the present invention may contain an additive unless the effects of the present invention are impaired. Specific examples of the additive include antioxidant, thermal stabilizer, weathering agent, mold releasing agent, lubricant, pigment, dye, plasticizer, antistatic agent, flame retardant, and a resin A as specified below. Such a resin A is preferably at least one selected from the group consisting of terpene resin, epoxy resin, phenol resin, and cyclic polyphenylene sulfide. For the resin A, an appropriate compound is selected in consideration of its combination with a thermoplastic resin as listed above used as matrix resin. For example, a terpene resin is preferably used when the molding temperature is in the range of 150°C to 270°C, and an epoxy resin is preferably used when the molding temperature is in the range of 270°C to 320°C. Specifically, the resin A is preferably a terpene resin when the thermoplastic resin is a polypropylene resin; the resin A is preferably an epoxy resin when the thermoplastic resin is a polycarbonate resin or a polyphenylene sulfide resin; and the resin A is preferably a terpenephenol resin when the resin A is a polyamide resin. An epoxy resin preferred for use as the resin A is a compound that has two or more epoxy groups, is substantially free of a curing agent, and does not cure through so-called three dimensional crosslinking when heated. Examples of such an epoxy resin include glycidyl ether type epoxy resins, glycidyl ester type epoxy resins, glycidyl amine type epoxy resins, and alicyclic epoxy resins. Two or more of these may be used in combination. Of these, glycidyl ether type epoxy resins including bisphenol A type epoxy resin and bisphenol F type epoxy resin are preferable because they have viscosity and heat resistance in a good balance.

In a preferred embodiment of the production method for the molding material according to the present invention, the resin A is first attached to a carbon fiber bundle, and then a thermoplastic resin is adhered. The step of attaching the resin A can be carried out by a known production method such as applying an oil agent, a sizing agent, or a matrix resin to a fiber bundle. More specifically, a predetermined amount of the resin A can be attached per unit length of the carbon fiber bundle by, for example, coating the surface of a heated rotating roll with a film of the resin A in a molten state having a predetermined thickness and supplying a carbon fiber bundle so that it runs while contacting or rubbing the roll surface. The coating of the roll surface with the resin A is carried out using the mechanism of a generally known coating machine such as reverse roll, positive revolving roll, kiss roll, sprayer, curtain, and extruder. In the process for attaching the resin A to the carbon fiber bundle, the resin A is infiltrated deep into the spaces among single fibers in the carbon fiber bundle by applying a tension with a roll or a bar to the carbon fiber bundle carrying the resin A, widening and binding it repeatedly, applying a pressure, vibrating it, or performing other operations at a temperature where the resin A melts. More specifically, a good method is to feed a carbon fiber bundle so that it travels while in contact with the surfaces of a plurality of heated rolls or bars.

In addition, the resin A-carrying carbon fiber bundle, which is composed of a carbon fiber bundle and the resin A carried thereon, is brought into contact with the aforementioned thermoplastic resin to form a molding material. In the thermoplastic resin laying step, a molten thermoplastic resin is laid so that it comes in contact with the resin A-carrying carbon fiber bundle. More specifically, good methods include a process in which a thermoplastic resin is laid continuously around the resin A-carrying carbon fiber bundle using an extruder and a coating die designed for wire coating, so that the former covers the latter, and a process in which the resin A-carrying carbon fiber bundle is flattened using a roll etc., and a film of a molten thermoplastic resin is laid over one side or both sides thereof using an extruder and a T-die, followed by integrating them using a roll etc.

After integrating the carbon fiber bundle and the thermoplastic resin in the above preferred embodiment, the integrated body may be cut to a constant length of, for example, 1 to 50 mm, by a device such as pelletizer and strand cutter. This cutting step may be continuous with the thermoplastic resin laying step. If the molding material is in a flat or sheet-like form, it may be slit into long and narrow strips before cutting. A tool such as sheet pelletizer may be used to perform slitting and cutting simultaneously.

In the molding material according to the present invention, the length of the carbon fibers is substantially the same as the length of the molding material. The molding material according to the present invention is preferably in the form of columnar pieces such as pellets. The expression "substantially the same length" suggests that in a pellet-shaped molding material, for example, no carbon fiber bundle and no carbon fiber contained in the carbon fiber bundles is cut in the middle of a pellet and no pellet contains a carbon fiber that is significantly shorter than the total length of the pellet. In particular, there are no specified limitations on the quantity of carbon fibers shorter than the total length of the molding material, but carbon fibers significantly shorter than the total length of the molding material are deemed absent if carbon fibers having lengths equal to 50% or less of the total length of the molding material account for 30% by mass or less. For the molding material according to the present invention, in the case where the length of the carbon fibers contained in a molding material is longer than the length of the molding material, it is deemed that they have the same length. Here, the total length of a molding material is defined as the length of the molding material measured in the direction of the vector sum of the vectors each connecting both ends of each single fiber in all carbon fibers in the molding material (for the present invention, this is defined as the carbon fiber axis direction). If the carbon fibers and the molding material have substantially the same length, they can produce a molded product having a long carbon fiber length, and therefore, a molded product having good physical properties can be obtained.

As illustrated in Fig. 1, the molding material according to the present invention has a core-sheath structure in which a "core portion" that contains carbon fibers is surrounded by and coated with a "sheath portion" that is substantially free of carbon fibers. It is noted, however, that for the present invention, even when part of the core portion is exposed at the surface of the molding material, it is deemed that a complete core-sheath structure is present if the length of the exposed part is 10% or less of the total length of the contour of the core portion. The definition of the core portion for the present invention is described in detail below. First, for a molding material under examination, a cross section perpendicular to the carbon fiber axial direction of the molding material (hereinafter occasionally referred to as vertical cross section) is exposed and observed by optical microscopy. Here, the smallest convex polygon that includes all single fibers in individual carbon fibers, namely, the so-called convex hull, is defined as the core portion for the present invention. There are generally known methods to determine the convex hull. Accordingly, in the same vertical cross section, the region other than the core portion is defined as the sheath portion for the present invention. It is noted that the molding material according to the present invention may contain an empty space, namely, so-called void, existing in either the core portion or the sheath portion or extending over them. A void existing on the inner side of the boundary of the convex hull is included in the area of the core portion whereas a void existing outside is included in the area of the sheath portion. In the case of a void that straddles the boundary of the convex hull, the part existing inside the boundary is included in the area of the core portion whereas a part existing outside is included in the area of the sheath portion. For the molding material according to the present invention, the core ratio $A/(A+B)$ wherein A is the areal fraction of the core portion and B is the areal fraction of the sheath portion is 0.1 to 0.5, preferably 0.1 to 0.4, and more preferably 0.2 to 0.4. The core ratio depends on the volume fraction of the carbon fibers and voids in the core portion, and it is important that all spaces between individual single fibers in the carbon fibers are filled completely with the resin. If the core ratio is 0.1 or more, it serves to produce a molded product having enhanced physical properties whereas if it is 0.5 or less, it allows the dispersibility to be maintained at a satisfactory level.

The volume fraction Vf of the carbon fibers contained in a molding material is preferably 5% to 25%, more preferably 10% to 25%, and still more preferably 15% to 25%. A higher volume fraction serves to produce a molded product having better physical properties, and such an effect is likely to be realized if it is 5% or more. A volume fraction of 25% or less serves for easy production of a molding material that contains highly dispersed carbon fibers. The volume fraction Vf of the carbon fibers can be determined by a generally known method such as burning off the components other than the carbon fibers or dissolving them in a solvent. When a component other than the carbon fibers has a high heat resisting temperature, the volume fraction Vf of the carbon fibers can be determined from the areal fraction of the carbon fibers in a cross section perpendicular to the carbon fiber axial direction in the molding material. The volume fraction can be adjusted properly by taking into consideration the density of the thermoplastic resin used and the density of the carbon fibers and changing the mass content of each of them.

Furthermore, for the molding material according to the present invention, it is preferable that the volume fraction Vf of the carbon fibers be within the above range and at the same time the volume fraction Vf of the carbon fibers and the core ratio $A/(A+B)$ satisfy the following relation:

$$1.5 \times Vf/100 \leq A/(A+B) \leq 3 \times Vf/100$$

When the core ratio is equal to Vf/100, the volume fraction of the carbon fibers in the core portion is 100%, and when the core ratio is 2xVf/100, the volume fraction of the carbon fibers in the core portion is 50%. The above relation, therefore, means that the volume fraction of the carbon fibers in the core portion is in the range of 33% to 67%. If the core ratio is adjusted within the above range, it means that the core portion is impregnated to an appropriate degree and that the core-sheath ratio is also in an appropriate range from the viewpoint of the degree of dispersion in the molded product. Adjustment of the core ratio within the above range can be realized by adopting an appropriate resin for the resin A and an appropriate degree of impregnation.

For the molding material according to the present invention, the areal void fraction in a cross section perpendicular to the carbon fiber axis direction in the molding material is 5% or less, preferably 4% or less, and more preferably 3% or less. If voids are present in the molding material, uniform kneading cannot be realized in the injection molding step, and the resulting molded product will be low in the dispersibility of carbon fibers. If the areal void fraction is 5% or less, the resulting molded product will be high in the dispersibility of carbon fibers. In determining the areal fraction of voids in a cross section perpendicular to the carbon fiber axis direction in the molding material, not only the core ratio in the molding material is measured, but also the cross section is observed focusing on empty voids in which neither the resin composition nor the carbon fiber is present. Empty voids can be easily identified by optical microscopy. To lessen voids, it is preferable to feed twisted carbon fibers to the molding material preparation process, instead of twisting them during the preparation process, and it is more preferable to add the resin A to improve the impregnability.

For the molding material according to the present invention, it is preferable that the area of the largest void contained in a cross section perpendicular to the carbon fiber axis direction in the molding material be 3,000 $\mu m^2$ or less, preferably 1,000 $\mu m^2$ or less, and more preferably 500 $\mu m^2$ or less. Not only a large total void volume but also the inclusion of large voids acts to deteriorate the dispersibility of carbon fibers in a molded product, and a molded product having a favorable dispersibility of carbon fibers will be produced easily when the maximum void area is 3,000 $\mu m^2$ or less. To decrease the maximum void area, it is preferable to feed twisted carbon fibers to the molding material preparation process, instead of twisting them during the preparation process, and it is more preferable to add the resin A to improve the impregnability.

The method for evaluating the parameters used for the present invention is described in detail below.

<Tensile modulus of carbon fibers>

The tensile modulus of carbon fibers is determined by the following procedure according to JIS R7608 (2004) "Resin impregnated strand test method". It is noted that in the case of a fiber bundle containing twisted carbon fibers, its evaluation is made after unraveling the twist by twisting it in the reverse rotation direction by the same number of turns as its original twist count. The resin mixture to be used consists of Celloxide (registered trademark) 2021P (manufactured by Daicel Chemical Industries, Ltd.), boron trifluoride monoethylamine (manufactured by Tokyo Chemical Industry Co. Ltd.), and acetone mixed at a ratio of 100/3/4 (parts by mass), and it is cured under the conditions of an atmospheric pressure, a temperature of 125°C, and a curing time of 30 minutes. Ten strands formed of carbon fiber bundles are examined and the measurements taken are averaged to determine the strand strength and strand elastic modulus. Here, the strain should be in the range of 0.1% to 0.6% when determining the strand elastic tensile modulus.

<Single-fiber diameter of carbon fiber>

A cross section of a single fiber of a carbon fiber sample under evaluation is observed by scanning electron microscopy to examine its cross-sectional features. The diameter of a perfect circle that has the same cross-sectional area as the observed cross section is calculated and adopted as the diameter of the single fiber. A total of 50 samples (N = 50) are observed and the average of observed diameters is adopted. Here, the acceleration voltage is set to 5 keV.

It is noted that the scanning electron microscope used for the present invention may be an S-4800 scanning electron microscope (SEM) manufactured by Hitachi High-Technologies Corporation.

<Twist angle in carbon fiber bundle surface layer>

• When evaluating a carbon fiber bundle as raw material

A guide bar is installed at a height of 60 cm from a horizontal surface, and an appropriate portion of a carbon fiber bundle is taped to the guide bar to serve as a fixed end, followed by cutting the fiber at a position 50 cm away from the fixed end to create a free end. The free end is enclosed in a folded piece of tape so that the fiber bundle will not unraveled into single fibers. To eliminate twists that are not semi-permanent twists and that are temporal or apt to unravel over time, the specimen is left in this state for 5 minutes and the free end is rotated while counting the number of turns, followed by recording the number of turns n (turns) required for complete untwisting. The residual twist count is calculated by the following formula. The above measuring procedure is performed three times repeatedly and the measurements are averaged to represent the residual twist count for the present invention.

$$\text{Residual twist count (turns/m)} = n \text{ (turns)} / 0.5 \text{ (m)}$$

The overall diameter ($\mu$m) of the carbon fibers is calculated by the following formula from the single-fiber diameter ($\mu$m) and the filament number described above, and the twist angle (°) in the carbon fiber bundle surface layer is calculated by the following formula using the twist count (turns/m).

$$\text{Overall diameter of carbon fibers (µm)} = \{(\text{the single-fiber diameter})^2 \times \text{filament number}\}^{0.5}$$
$$\text{Twist angle (°) in carbon fiber bundle surface layer} = \text{atan (overall diameter of fibers} \times 10^{-6} \times \pi \times \text{twist count)}$$

• When evaluating carbon fibers contained in a molding material

The molding material is heated at a temperature of 500°C for 30 minutes in an air atmosphere using an electric furnace to incinerate and remove the resin composition to separate carbon fibers. The carbon fibers separated are taken out gently from the electric furnace while taking care not to let them untwist, and a side face is photographed by stereomicroscopy at a magnification of 5 to 15 times. From such a photograph, the angle (°) between the fiber running direction of the carbon fibers as a bundle (which corresponds to the main axis direction of the molding material described above) and the fiber axis running direction of the single fibers in the outermost layer of the separated carbon fiber bundle is measured and adopted as the twist angle (°) of the carbon fiber surface layer. Measurements were taken from at least three pellets of a molding material and their average is adopted.

<Weight loss rate on heating at 450°C of carbon fibers>

Carbon fibers under evaluation are cut to a mass of 2.5 g and wound up on a reel having a diameter of about 3 cm, and the mass of the specimen before heat treatment $w_0$ (g) is measured. Then, it is heated in a nitrogen atmosphere in an oven at a temperature of 450°C for 15 minutes, and allowed to cool to room temperature in a desiccator, followed by measuring its mass after heating $w_1$ (g). The weight loss rate on heating at 450°C is calculated by the following formula. Here, three measurements are taken and their average is adopted.

$$\text{Weight loss rate on heating at 450°C (\%)} = (w_0 - w_1) / w_0 \times 100 \text{ (\%)}$$

<Crystallinity parameter Iv/Ig measured by Raman spectroscopy>

A molding material specimen is embedded in resin and polished to expose a cross section of a single fiber of the carbon fiber contained in the molding material. In order to prevent damage that may have influence on the Raman spectrum from being caused by polishing, finish polishing is performed at the final stage of the polishing using a polishing material with a diameter of about 0.05 $\mu$m. Five single-fiber cross sections of carbon fibers are randomly selected, and Raman spectra are measured from each of them using a microscopic Raman spectrometer. Each measurement is taken from a point near the center of a single-fiber cross section. The measuring conditions include an excitation wavelength of 532 nm, a laser intensity of 1 mW, a measuring range of 900 to 2,000 cm$^{-1}$, a laser beam narrowed down to a diameter of 2 $\mu$m, and a measuring time of 60 seconds x 3 times. The baseline in the spectrum obtained is offset using a linear function so that the scattering intensity is zero at 1,000 cm$^{-1}$ and 1800 cm$^{-1}$, and the crystallization parameter Iv/Ig where Ig is the height of the G band and Iv is the height of the valley bottom near 1,480 cm$^{-1}$, is calculated. To minimize the effect of errors in calculating Ig, the range within ±10 cm$^{-1}$ of the visually identified apex of the G band is approximated by a quadratic function using the least squares approximation method, and the peak top intensity of the fitting function is adopted as Ig. For Iv as well, the range of ±10 cm$^{-1}$ of the valley near 1,480 cm$^{-1}$ is approximated by a quadratic function using the least squares approximation method to calculate Iv. For the present invention, the Iv/Ig measurements taken from the aforementioned five points are averaged and the average is used for evaluation.

In the Examples given herein, EpoKwick (registered trademark) FC (manufactured by Buehler) was used as the embedding resin, and AutoMet (registered trademark) 250Pro (manufactured by Buehler) was used as the polishing device. For the polishing, rough polishing was performed using #320, #500, and #700 polishing pads, and then finish polishing was performed using MasterTex (manufactured by Buehler) as polishing cloth and an alumina suspension with a diameter of 0.05 μm as polishing agent. To serve to check for damage caused by polishing, when a molding material specimen is embedded in resin, TORAYCA (registered trademark) M40J-12000-50E manufactured by Toray Industries, Inc. is added together as a standard for testing in such a manner that the fiber axis is in the direction perpendicular to the surface to be polished. If the Iv/Ig value of the M40J standard determined by the above method is in the range of 0.18±0.02, it suggests that damage by polishing is at a minimized level, whereas otherwise, the specimen is considered as inappropriate and polishing is performed again.

<Core ratio in molding material, areal void fraction, and maximum void area>

A molding material specimen under evaluation is embedded in resin and polished so that a cross section perpendicular to the carbon fiber axis direction can be observed, followed by observing it by optical microscopy. The observation magnification is set to an appropriate size, for example 2 mm, so that the entire molding material (pellet) can be observed, and three cross sections of the molding material are examined. The areas of the core, sheath, and voids are measured by image analysis according to the above core, sheath, and void calculation methods, and the core ratio, areal void fraction, and maximum void area are calculated from those values. The average value over the three cross sections is also used.

<Bending test of molded product>

An ISO type dumbbell test piece is examined according to ISO 178 (2010) using a three point bending test tool (indenter radius 5 mm) set to a fulcrum distance of 64 mm, and bending strength was measured under test conditions including a test speed of 2 mm/min. The test piece is left to stand in a constant temperature and humidity chamber adjusted to a temperature of 23°C and 50%RH for 24 hours before being subjected to characterization test.

Measurements are taken from six molded product specimens (n = 6) and averaged to provide a value that represents its bending strength.

For the Examples and Comparative examples described later, Instron (registered trademark) 4201 universal testing machine was used as testing machine.

<Dispersibility of carbon fibers in molded product>

A molding material is processed into a molded product by injection molding, and the state of carbon fibers dispersed in the form of single-fibers in the molded product is evaluated as dispersibility. "Being dispersed in the form of single-fibers" means that multiple single fibers of carbon fibers exist close to each other in such a manner that they are not parallel to each other in the length direction or are not in contact with each other if they are parallel to each other. If such multiple single fibers located close to each other are parallel to each other and also in contact with each other, they are regarded as being in an undispersed state. A molded product is observed in a field of view of 80 mm × 80 mm and the average dispersibility determined in terms of the index defined below is used for evaluation.

S: The number of aggregates of single-fibers parallel to each other is 0.
A: The number of aggregates of single-fibers parallel to each other is 1 or 2.
B: The number of aggregates of single-fibers parallel to each other is 3 to 9.
C: The number of aggregates of single-fibers parallel to each other is 10 or more.

EXAMPLES

The present invention will now be illustrated in detail with reference to examples although the invention is not limited thereto. In particular, although attention is focused on only one representative thermoplastic resin and an evaluation is made for a case where particular carbon fibers are applied, the present invention should not be construed as being limited to specific numbers of thermoplastic resins.

[Example 1]

A spinning dope solution containing a polyacrylonitrile copolymer consisting of acrylonitrile and itaconic acid was prepared. Coagulated fibers were produced through a dry-jet wet spinning process in which the resulting spinning dope solution was extruded into air through a spinneret and introduced into a coagulation bath containing an aqueous solution of dimethyl sulfoxide. Then, the coagulated fibers were rinsed, stretched in a hot water bath at 90°C to an underwater stretching ratio of 3, treated with a silicone oil agent, dried using a roller heated at a temperature of 160°C, and subjected to pressurized steam stretching to a stretching ratio of 4 to prepare a precursor fiber bundle for carbon fiber having a single-fiber fineness of 1.1 dtex.

Subsequently, four of such precursor fiber bundles prepared above were combined to form a bundle containing 12,000 single-fibers and heat-treated at a stretching ratio of 1 in an air atmosphere in an oven at 230°C to 280°C, thereby converting it into a stabilized fiber bundle. The resulting stabilized fiber bundle was subjected to twist processing to twist it 45 turns/m and subjected to pre-carbonization treatment at a stretching ratio of 1.0 in a nitrogen atmosphere at a temperature of 300°C to 800°C to provide a pre-carbonized fiber bundle. Then, the pre-carbonized fiber bundle was subjected to carbonization treatment under the conditions of a stretching ratio of 1.02 and a carbonization temperature of 1,900°C to provide a carbon fiber bundle without giving a sizing agent.

Using a long fiber reinforced resin pellet production machine containing a twin-screw extruder (TEX-30α, manufactured by Japan Steel Works, Ltd., screw diameter 30 mm, L/D = 32) equipped with a coating die designed for wire coating installed at the end thereof, polyphenylene sulfide resin (Torelina (registered trademark) M2888, manufactured by Toray Industries, Inc.), which is a thermoplastic resin, is supplied from the main hopper and melt-kneaded at a screw rotation speed of 200 rpm with an extruder cylinder temperature set to 330°C. Then, 8.7 parts by mass of solid bisphenol A type epoxy resin (jER (registered trademark) 1004AF(E-2), manufactured by Mitsubishi Chemical Corporation, softening point 97°C) heated and melted at 200°C was given to 100 parts by mass of carbon fibers and supplied to the die port (diameter 3 mm) designed for discharging a composition containing a molten thermoplastic resin in such a manner that the thermoplastic resin was supplied continuously so as to cover the surfaces of the carbon fibers. After cooling the resulting strand, it was cut into a pellet length of 7 mm with a cutter to provide long fiber pellets. At this time, the take-up speed was adjusted in such a manner that the carbon fiber content was to be 30 mass%. The length of the carbon fibers was substantially the same as the length of the long fiber pellets.

Using an injection molding machine (J110AD, manufactured by Japan Steel Works, Ltd.), the long fiber pellets thus obtained were injection-molded under the conditions of an injection time of 5 seconds, a back pressure of 5 MPa, a dwell pressure of 20 MPa, a dwell time of 10 seconds, a cylinder temperature of 330°C, and a mold temperature of 130°C to provide an ISO type dumbbell test piece as a molded product. Here, the cylinder temperature means the temperature of the portion of the injection molding machine where the molding material is heated and melted, and the mold temperature means the temperature of the mold into which the resin to be molded to a predetermined shape is injected. The resulting test piece (molded product) was then subjected to a characteristics evaluation. Results of evaluation performed by the aforementioned method are summarized in Table 1.

[Example 2]

Except that the carbon fibers prepared in Example 1 were further heat-treated at a stretching ratio of 1.00 in a nitrogen atmosphere at 2,350°C to provide carbon fibers for evaluation, an evaluation was performed in the same manner as in Example 1.

[Example 3]

Except that the additional heat treatment at 2,350°C was performed at a stretching ratio of 1.02, evaluation was carried out in the same manner as in Example 2.

[Example 4]

Except that the mass content of the carbon fibers contained in the resin composition was adjusted to 20 mass%, evaluation was carried out in the same manner as in Example 1.

[Comparative example 1]

Except that TORAYCA (registered trademark) T700S-24000-50E, manufactured by Toray Industries, was used as the carbon fiber component, evaluation was carried out in the same manner as in Example 1.

[Comparative example 2]

Except that TORAYCA (registered trademark) M40J-12000-50E, manufactured by Toray Industries, was used as the carbon fiber component, evaluation was carried out in the same manner as in Example 1.

[Comparative example 3]

Except that TORAYCA (registered trademark) M50J-6000-50E, manufactured by Toray Industries, was used as the carbon fiber component, evaluation was carried out in the same manner as in Example 1.

[Comparative example 4]

Except that long fiber pellets were prepared while giving a twist of 1.3° according to the production method specified in Japanese Unexamined Patent Publication (Kokai) No. HEI 5-169445, evaluation was carried out in the same manner as in Comparative example 1.

[Comparative example 5]

Except that the mass content of the carbon fibers was adjusted to 20 mass% instead of 30 mass%, evaluation was carried out in the same manner as in Comparative example 4.

[Table 1]

| | carbon fiber | | | | | | molding material | | | | molded product | |
|---|---|---|---|---|---|---|---|---|---|---|---|---|
| | tensile strength | single-fiber diameter | twist angle | weight loss rate on heating | lv/lg | volume fraction of carbon fibers, Vf (1) | core ratio A/(A+B) (2) | (2)/(1) | areal void fraction | maximum void area | flexural modulus | dispersibility |
| | GPa | μm | ° | % | - | % | - | - | % | μm² | GPa | - |
| Example 1 | 390 | 7.2 | 6.6 | 0.04 | 0.52 | 23 | 0.38 | 1.6 | 1.1 | 1,100 | 41 | S |
| Example 2 | 480 | 7.1 | 6.6 | 0.03 | 0.14 | 23 | 0.35 | 1.6 | 0.5 | 5,000 | 48 | A |
| Example 3 | 499 | 6.9 | 6.6 | 0.03 | 0.14 | 23 | 0.35 | 1.6 | 0.4 | 400 | 49 | S |
| Example 4 | 390 | 7.2 | 6.6 | 0.04 | 0.52 | 16 | 0.30 | 1.9 | 0.8 | 500 | 31 | S |
| Comparative example 1 | 230 | 6.9 | 0 | 1.00 | 0.91 | 23 | 0.42 | 1.9 | 3.1 | 1,200 | 27 | B |
| Comparative example 2 | 377 | 5.2 | 1.3 | 1.20 | 0.18 | 23 | 0.41 | 1.8 | 1.2 | 1,300 | 37 | B |
| Comparative example 3 | 472 | 5.0 | 1.3 | 1.20 | 0.10 | 22 | 0.39 | 1.8 | 1.4 | 1,500 | 40 | B |
| Comparative example 4 | 230 | 6.9 | 1.3 | 1.00 | 0.91 | 23 | 0.46 | 2.0 | 8.1 | 90,000 | 25 | C |
| Comparative example 5 | 230 | 6.9 | 1.3 | 1.00 | 0.91 | 16 | 0.30 | 1.9 | 6.7 | 85,000 | 18 | C |

EXPLANATION OF NUMERALS

1. Core portion containing carbon fibers densely
2. Sheath portion composed mainly of thermoplastic resin

**Claims**

1.  A molding material comprising

    a resin composition containing a thermoplastic resin
    and carbon fibers,
    wherein the carbon fibers have substantially the same length as the length of the molding material;
    the twist angle of the carbon fiber surface layer is 2.0° to 30.5°;
    the core ratio A/(A+B) is 0.1 to 0.5 where A is the areal fraction of the core portion containing carbon fibers and B is the areal fraction of the remaining portion, that is, the sheath portion, in a cross section perpendicular to the carbon fiber axis direction in the molding material;
    and the areal void fraction in a cross section perpendicular to the carbon fiber axis direction in the molding material is 5% or less.

2.  A molding material as set forth in claim 1, wherein the volume fraction Vf of the carbon fibers is 5% to 25% and the volume fraction Vf of the carbon fibers and the core ratio A/(A+B) satisfy the relation given below:

$$1.5 \times Vf/100 \leq A/(A+B) \leq 3 \times Vf/100.$$

3.  A molding material as set forth in either claim 1 or 2, wherein the tensile modulus of the carbon fibers is 280 to 500 GPa.

4.  A molding material as set forth in any one of claims 1 to 3, wherein the weight loss rate on heating at 450°C of the carbon fibers is 0.15% or less.

5.  A molding material as set forth in any one of claims 1 to 4, wherein the single-fiber diameter of the carbon fibers is 6.0 μm or more.

6.  A molding material as set forth in any one of claims 1 to 5, wherein the crystallinity parameter Iv/Ig of the carbon fibers determined by Raman spectroscopy is 0.25 to 0.80.

7.  A molding material as set forth in any one of claims 1 to 6, wherein the area of the largest void contained in a cross section perpendicular to the carbon fiber axis direction in the molding material is 3,000 μm$^2$ or less.

8.  A molded product produced by molding a molding material as set forth in any one of claims 1 to 7.

[Fig. 1]

**INTERNATIONAL SEARCH REPORT**

International application No.

PCT/JP2020/041171

| A. CLASSIFICATION OF SUBJECT MATTER |
|---|
| C08K 7/06(2006.01)i; C08L 101/00(2006.01)i; D01F 9/22(2006.01)i |
| FI: C08L101/00; C08K7/06; D01F9/22 |
| According to International Patent Classification (IPC) or to both national classification and IPC |

| B. FIELDS SEARCHED |
|---|
| Minimum documentation searched (classification system followed by classification symbols) |
| C08K7/06; C08L101/00; D01F9/22 |

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 59-62114 A (TORAY INDUSTRIES, INC.) 09 April 1984 (1984-04-09) claims, page 1, right column, page 2, upper right column to page 2, lower right column, line 3, page 3, upper right column, line 2, fig. 1-4 | 1-2, 5, 7-8<br>3-4, 6 |
| Y | WO 2019/172247 A1 (TORAY INDUSTRIES, INC.) 12 September 2019 (2019-09-12) claims, paragraphs [0012], [0028], [0055], examples | 3-4, 6 |
| A | JP 2012-57277 A (TORAY INDUSTRIES, INC.) 22 March 2012 (2012-03-22) claims, examples | 1-8 |
| A | JP 2010-150358 A (TORAY INDUSTRIES, INC.) 08 July 2010 (2010-07-08) claims, examples | 1-8 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 December 2020 (24.12.2020) | 12 January 2021 (12.01.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**
Information on patent family members

International application no.

PCT/JP2020/041171

| Patent Documents referred in the Report | Publication Date | Patent Family | Publication Date |
|---|---|---|---|
| JP 59-62114 A | 09 Apr. 1984 | (Family: none) | |
| WO 2019/172247 A1 | 12 Sep. 2019 | TW 201940771 A | |
| JP 2012-57277 A | 22 Mar. 2012 | (Family: none) | |
| JP 2010-150358 A | 08 Jul. 2010 | US 2012/0015186 A1 claims, examples WO 2010/074108 A1 EP 2371505 A1 TW 201033258 A CN 102245362 A KR 10-2011-0098900 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI6320536 A
- JP 2000309060 A
- JP HEI5169445 A
- JP 2017190426 A

### Non-patent literature cited in the description

- *KOBE STEEL ENGINEERING REPORTS,* 2018, vol. 67 (2